# EUROPEAN PATENT SPECIFICATION

(11) **EP 4 276 997 B1**
(45) Date of publication and mention of the grant of the patent: **01.10.2025**
(21) Application number: 22907876.1
(22) Date of filing: 12.12.2022
(51) Int. Cl.: H01M 50/271, H01M 50/282, H01M 50/249, H01M 50/30

(54) **BATTERY MODULE HAVING IMPROVED SAFETY**
BATTERIEMODUL MIT VERBESSERTER SICHERHEIT
MODULE DE BATTERIE À SÉCURITÉ AMÉLIORÉE

(30) Priority: 16.12.2021 KR 20210181113; 02.12.2022 KR 20220166952
(43) Date of publication of application: 15.11.2023
(60) Divisional application: 25196722.0
(73) Proprietor: LG Energy Solution, Ltd., Seoul 07335 (KR)
(72) Inventor: LEE, Jung-Hoon, Daejeon 34122 (KR); JUNG, Hye-Mi, Daejeon 34122 (KR); YOON, Seok-Eun, Daejeon 34122 (KR); LEE, Young-Ro, Daejeon 34122 (KR)
(74) Representative: Plasseraud IP
(86) International application number: PCT/KR2022/020164
(87) International publication number: WO 2023/113409

(56) References cited:
- EP-A2- 3 565 021
- EP-A2- 3 817 133
- WO-A1-2021/201408
- CN-U- 205 542 947
- CN-U- 214 542 436
- KR-A- 20130 086 677
- KR-A- 20150 069 732
- KR-A- 20170 135 469

## Description

### TECHNICAL FIELD

The present application claims priority to Korean Patent Application No. 10-2021-0181113 filed on December 16, 2021 and Korean Patent Application No. 10-2022-0166952 filed on December 2, 2022.

The present disclosure relates to a battery, and more specifically, to a battery module having improved safety, and a battery pack and a vehicle including the same.

### BACKGROUND ART

As the demand for portable electronic products such as laptops, video cameras, and mobile phones rapidly increases and the commercialization of robots, electric vehicles, and the like begins in earnest, research on high-performance secondary batteries capable of repeated charge/discharge is being actively conducted.

Currently commercialized secondary batteries include nickel cadmium batteries, nickel hydride batteries, nickel zinc batteries, lithium secondary batteries and the like, and among them, lithium secondary batteries are in the spotlight because they have almost no memory effect compared to nickel-based secondary batteries and thus have advantages of free charge/discharge, very low self-discharge rate and high energy density.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively are disposed with a separator interposed therebetween, and an exterior material, that is, a battery case, for sealing and accommodating the electrode assembly together with an electrolyte.

In general, depending on the shape of an exterior material, lithium secondary batteries may be classified into a can-type secondary battery in which an electrode assembly is embedded in a metal can, and a pouch-type secondary battery in which an electrode assembly is embedded in a pouch of an aluminum laminate sheet.

Recently, secondary batteries have been widely used for power or energy storage not only in small devices such as portable electronic devices, but also in medium and large devices such as electric vehicles and energy storage systems (ESSs). These secondary batteries may be accommodated together inside a module case in a state where a plurality of them are electrically connected to form one battery module. In addition, a plurality of such battery modules may be connected to form one battery pack.

However, when a plurality of secondary batteries (battery cells) or a plurality of battery modules are concentrated in a narrow space, they may be vulnerable to thermal events. In particular, when an event such as thermal runaway occurs in any one battery cell, high-temperature gas, flame, heat, or the like may be generated. If such gas, flame, heat, or the like is transferred to other battery cells included in the same battery module, an explosive chain reaction such as thermal propagation may occur. In addition, such a chain reaction may cause not only an accident such as fire or explosion in the corresponding battery module, but also fire or explosion in other battery modules.

Moreover, in the case of a medium to large battery pack such as an electric vehicle, a large number of battery cells and battery modules are included to increase output and/or capacity, and thus the risk of a thermal chain reaction may increase. In addition, in the case of a battery pack mounted on an electric vehicle or the like, a user such as a driver may exist nearby. Therefore, when a thermal event generated in a specific battery cell or module is not properly controlled and a chain reaction occurs, it may cause not only significant property damage but also damage of human life.

In particular, in the case of a conventional battery module, an insulating cover may be located at a portion where an electrode lead of each battery cell is located to secure insulation between the electrode lead and the module case. In this case, the insulating cover is mainly an injection molding material made of plastic and has a problem of being vulnerable to flame. Therefore, when a flame or venting gas discharged from a specific battery cell is directed at the insulating cover, the insulating cover melts and may not properly protect a welded portion between adjacent electrode leads.

Moreover, when an internal discharge generated in the progress of the ignition of the battery cell, such as a residue generated as the battery cell or bus bar housing melts, heads toward the electrode lead, it may cause an internal short circuit. Also, when the electrode lead moves during the ejection process of venting gas, there is a possibility that an internal short circuit may occur by contacting another electrode lead that is not connected. In addition, since the portion where the electrode lead is located, that is, the portion where the terrace portion of the battery cell is located, has a relatively wide space, it is highly likely that flame or venting gas may be intensively introduced thereto. Therefore, thermal runaway of other battery cells may be caused by flame or gas.

In addition, module terminals or connector terminals are located at the portion where the electrode lead is located in many cases, and venting gas or flame may be discharged to the outside of the battery module through gaps or voids formed in these module terminals or connector terminals. In this case, the possibility of thermal runaway propagation between battery modules may increase.

EP3565021 provides a bus bar assembly installed in a frame for fixing a plurality of stacked battery cells. EP 3817133 relates to a battery module with improved space utilization of a secondary battery.

### DISCLOSURE

### Technical Problem

The present disclosure is designed to solve the problems of the related art, and therefore the present disclosure is directed to providing a battery module configured to improve safety when a thermal event occurs inside the battery module, and a battery pack and a vehicle including the same.

However, technical problems to be solved by the present disclosure are not limited to the above-described problems, and other problems not mentioned herein may be clearly understood by those skilled in the art from the following description of the present disclosure.

### Technical Solution

A battery module according to one aspect of the present disclosure for achieving the above-described objectives includes a cell assembly including a plurality of battery cells electrically connected to each other through an electrode lead; a module case accommodating the cell assembly in an internal space; and a cover member adhered to a side portion of the cell assembly in which the electrode lead protrudes in the internal space of the module case. The cover member is configured to be filled in a side portion of the cell assembly where an electrode lead protrudes in the cell assembly.

Also, the module case may include a body frame in which at least one of a front side and a rear side is open, and an end plate coupled to the opening of the body frame.

Also, the electrode lead may be located at a side near the end plate in the cell assembly, and the cover member may be interposed between the electrode lead of the cell assembly and the end plate.

Also, the cover member may be filled between the sealing portions of adjacent battery cells.

Also, the cover member may be filled entirely from an upper end to a lower end at the front or rear of the cell assembly.

Also, the cover member may be configured such that the upper end and the lower end are bent in the direction of the cell assembly.

Also, the cover member may be configured to entirely cover the electrode leads of the plurality of battery cells from an upper end to a lower end.

Also, the module case may have a venting hole formed on at least one side of an upper portion and a lower portion.

Also, the battery module according to the present disclosure may further include a venting unit provided on the outer side of a portion where a venting hole is formed in the module case and configured to allow the venting gas discharged from the venting hole to move.

Also, a battery pack according to another aspect of the present disclosure for achieving the above-described objectives includes a battery module according to the present disclosure.

Also, a vehicle according to still another aspect of the present disclosure for achieving the above-described objectives includes a battery module according to the present disclosure.

### Advantageous Effects

According to the present disclosure, even if a thermal event occurs inside the battery module, the safety of the battery module may be secured to a certain level or higher.

In particular, according to one aspect of the present disclosure, when a flame or venting gas is generated from a specific cell inside the battery module, the direction of the flame or venting gas may be controlled.

Moreover, according to an embodiment of the present disclosure, it is possible to suppress or block the flame or venting gas from being directed toward the electrode lead side.

Therefore, it is possible to prevent the occurrence of an internal short circuit caused by internal discharge being attached to electrode leads or damage or movement of electrode leads due to the flame or venting gas ejected from a specific battery cell.

In addition, according to this embodiment of the present disclosure, high-temperature gas or flame may not be introduced to the electrode lead side of the cell assembly, thereby preventing thermal runaway propagation between battery cells.

Also, according to this embodiment of the present disclosure, it is possible to suppress or block the outflow of flame or venting gas by air gaps or holes formed in module terminals or connector terminals existing in a portion where the electrode leads are positioned in the module case. Therefore, in this case, it is possible to more effectively prevent thermal runaway propagation to other battery modules.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a combined perspective view schematically showing the configuration of a battery module according to an embodiment of the present disclosure.
FIG. 2 is an exploded perspective view showing some configurations of the battery module of FIG. 1.
FIG. 3 is a partial perspective view in which some configurations are further separated from the configuration of FIG. 2.
FIG. 4 is a front view showing some configurations of FIG. 2.
FIG. 5 is a partial perspective view schematically showing some configurations of a battery module according to another embodiment of the present disclosure.
FIG. 6 is a top view showing the configuration of FIG. 5.
FIG. 7 is a cross-sectional view taken along line A3-A3' in FIG. 5.
FIG. 8 is an enlarged view showing portion A4 in FIG. 7.
FIG. 9 is an enlarged view showing portion A6 in FIG. 7.
FIG. 10 is a view schematically showing some separated configurations of a battery module according to still another embodiment of the present disclosure.
FIG. 11 is a view schematically showing a cross-sectional configuration in a state in which the battery module of FIG. 10 is coupled.
FIG. 12 is a view schematically showing some separated configurations of a battery module according to still another embodiment of the present disclosure.
FIG. 13 is a perspective view of a configuration of a battery module including the configuration of FIG. 12 as viewed from the bottom.
FIG. 14 is a cross-sectional view taken along line A10-A10' in FIG. 13.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that modifications could be made thereto without departing from the scope of the appended claims.

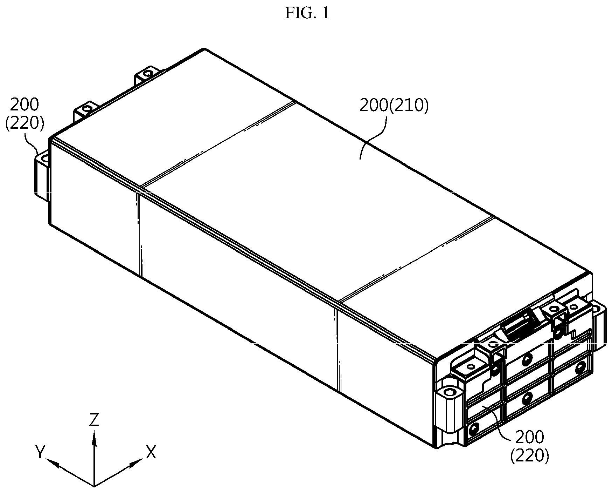

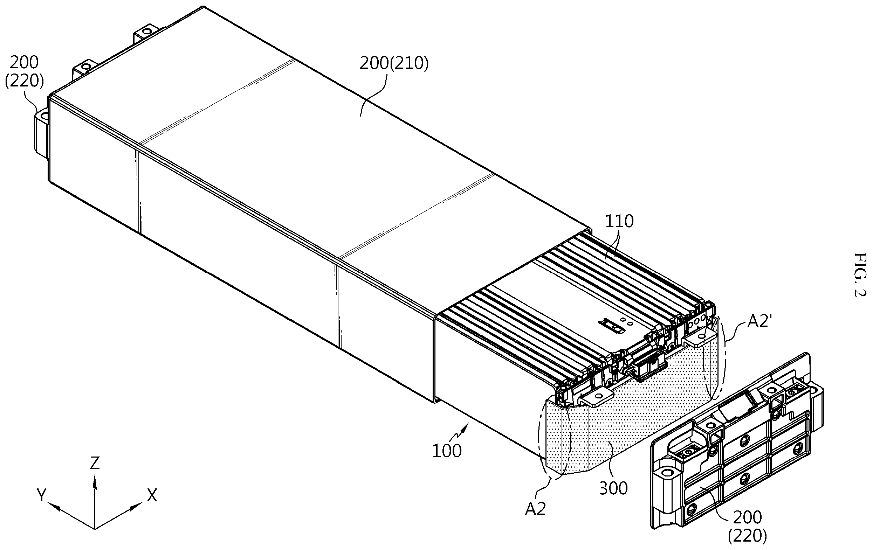

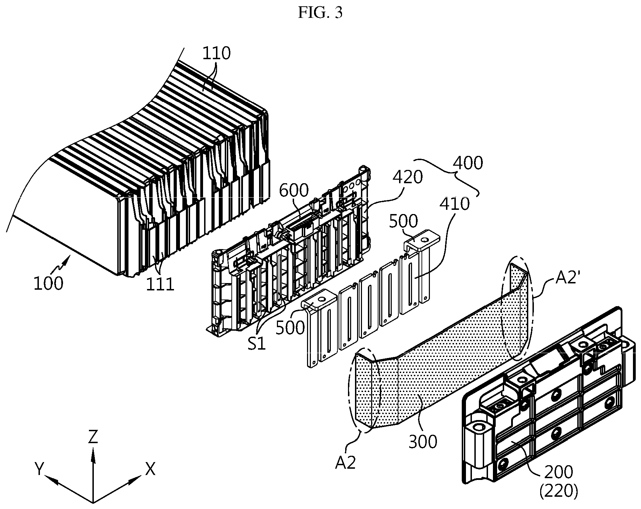

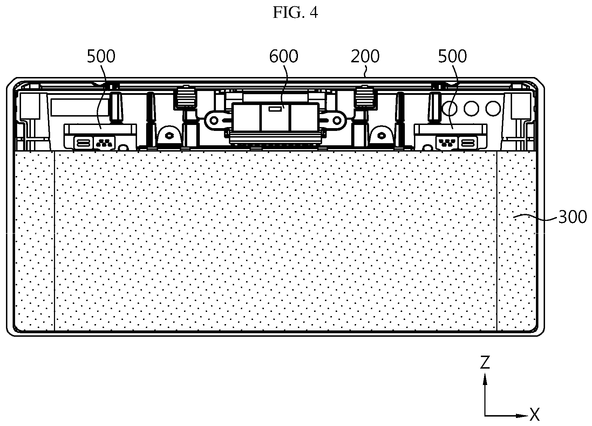

FIG. 1 is a combined perspective view schematically showing the configuration of a battery module according to an embodiment of the present disclosure, and FIG. 2 is an exploded perspective view showing some configurations of the battery module of FIG. 1. Also, FIG. 3 is a partial perspective view in which some configurations are further separated from the configuration of FIG. 2, and FIG. 4 is a front view showing some configurations of FIG. 2.

Referring to FIGS. 1 to 4, the battery module according to the present disclosure includes a cell assembly 100, a module case 200, and a cover member 300.

The cell assembly 100 may include a plurality of battery cells 110. Here, each battery cell 110 may mean a secondary battery. A secondary battery may include an electrode assembly, an electrolyte, and a battery case. In particular, the battery cell 110 provided in the cell assembly 100 may be a pouch-type secondary battery. However, other types of a secondary battery, such as a cylindrical battery or a prismatic battery, may also be employed in the cell assembly 100 of the present disclosure.

A plurality of secondary batteries may form the cell assembly 100 in a form of being stacked to each other. For example, a plurality of secondary batteries may be stacked side by side in a horizontal direction (X-axis direction in the drawing) in a state where each is erected in a vertical direction (Z-axis direction in the drawing).

Each battery cell 110 may include an electrode lead 111. In this case, the electrode leads 111 may be located at both ends or one end of each battery cell 110. The plurality of battery cells 110 may be electrically connected to each other in series and/or in parallel through the electrode leads 111. At this time, the electrode leads 111 of each battery cell 110 may be directly connected by contacting each other, or may be indirectly connected through a bus bar or the like. Meanwhile, a secondary battery in which the electrode lead 111 protrudes in both directions may be referred to as a bidirectional cell, and a secondary battery in which the electrode lead 111 protrudes in one direction may be referred to as a unidirectional cell. FIG. 2 and the like illustrate that the electrode lead 111 protrudes in both directions, forward and backward. However, the present disclosure is not limited by the specific type or form of the secondary battery, and various types of secondary batteries known at the time of filing the present disclosure may be employed in the cell assembly 100 of the present disclosure.

As shown in FIG. 2, the module case 200 may be configured to have an internal space, that is, an empty space formed therein to accommodate the cell assembly 100. Moreover, the module case 200 may be configured in a rectangular parallelepiped shape, as shown in FIGS. 1 and 2. Also, the cell assembly 100 may be accommodated in the internal space of the rectangular parallelepiped shape.

The cover member 300 may be provided in the internal space of the module case 200 together with the cell assembly 100. In particular, the cover member 300 may be adhered to the side portion of the cell assembly 100. Moreover, the cell assembly 100 may be configured such that the electrode lead 111 protrudes in a specific direction, and the cover member 300 may be adhered to the side portion of a portion where the electrode lead 111 protrudes in the cell assembly 100.

For example, referring to FIGS. 2 and 3, the cell assembly 100 may have six side portions (upper portion, lower portion, front portion, rear portion, left portion, and right portion) in the form of a plurality of battery cells 110 being stacked together. In this case, the electrode lead 111 may be provided in the cell assembly 100 in a form protruding from a specific side portion of the cell assembly 100, for example, the front and rear portions, respectively, as shown in the drawing. At this time, the cover member 300 may be adhered to the front and rear portions of the cell assembly 100, respectively, where the electrode leads 111 are located.

The cover member 300 may be formed of an adhesive material only, or may be configured in a form in which an adhesive material and a non-adhesive material are provided together. In addition, the cover member 300 may continue to maintain adhesiveness, or may be configured in a form in which adhesiveness disappears due to curing of the adhesive material in an adhered state. Here, adhesion may be a meaning including cohesion.

According to this embodiment of the present disclosure, a portion in which a plurality of electrode leads 111 are coupled and fixed to each other in the cell assembly 100 may be stably maintained. In particular, the plurality of electrode leads 111 may be coupled and fixed in a mutually welded form, and since the cover member 300 is adhered to the cell assembly 100 at the portion where the electrode leads 111 are present, the welding state of the plurality of electrode lead 111 may be stably maintained. Therefore, even if a venting gas or flame is generated in a specific battery cell 110 among several battery cells 110 included in the cell assembly 100, the electrode lead 111 may be protected by the cover member 300. Moreover, since the welding state or position of the electrode lead 111 may be kept constant by the cover member 300, the movement of the electrode lead 111 may be suppressed by the ejection pressure of the venting gas or the pressure of the flame. In addition, according to the above embodiment, even if the discharge in the form of molten internal components is ejected from a specific battery cell 110, such discharge may be directed toward the electrode lead 111 side and prevented from adhering to the electrode lead 111. Therefore, it is possible to effectively prevent a short circuit from occurring inside the battery module, particularly on the electrode lead side, due to the movement of the electrode lead 111 or the adhesion of the discharge.

In addition, according to the above embodiment, it is possible to suppress the flow of gas, flame, discharge, or the like ejected from the battery cell 110 in the direction where the electrode lead 111 is located. Therefore, it is possible to more effectively prevent thermal runaway propagation through the terrace portion where the electrode lead 111 is located in the cell assembly 100.

In particular, at least a portion of the cover member 300 may be adhered to the electrode leads 111 of the plurality of battery cells 110 provided in the cell assembly 100.

For example, referring to FIGS. 2 and 3, the electrode leads 111 of the plurality of battery cells 110 included in the cell assembly 100 may be connected to each other by welding or the like. In this case, the cover member 300 may be attached in direct contact with the electrode leads 111 of at least some of the battery cells 110. Moreover, the cover member 300 may be adhered to all of the electrode leads 111 of the entire battery cell 110.

For example, as shown in FIGS. 2 to 4, the cover member 300 may be configured to cover the outer surface of the electrode lead 111 by being adhered to at least the outer surface of the electrode lead 111. For example, the electrode leads 111 may be provided at the front side of the cell assembly 100 (-Y-axis direction in the drawing), and the cover member 300 may be configured to adhere to the front side surface of the front side electrode lead 111.

According to this embodiment of the present disclosure, the electrode lead 111 provided in the cell assembly 100 may be directly adhered to the cover member 300. Therefore, it is possible to more reliably prevent the discharged material (molten particles, or the like) of the battery cell 110 from contacting the surface of the electrode lead 111, particularly the outer surface (front side surface or rear side surface) thereof. Also, in this case, movement of the electrode lead 111 by gas or flame may be more reliably restricted. Therefore, it is possible to more effectively prevent the occurrence of an internal short circuit or the like on the electrode lead 111 side of the battery module.

The cover member 300 may be configured to be adjacent to or in contact with the electrode lead 111. Therefore, the cover member 300 may be made of a material having electrical insulation or may include a material having electrical insulation. In addition, the cover member 300 may include an adhesive or cohesive material to be adhered to the outer surface of the electrode lead 111. The adhesive or cohesive properties of the cover member 300 may be continuously maintained or may change depending on temperature or the like.

The cover member 300 may include various resins or various phase change materials (PCMs) known at the time of filing of the present disclosure. In particular, the cover member 300 may be made of or include a heat transfer material applied to the lower portion of the cell assembly 100 inside the battery module. For example, the cover member 300 may include a thermal interface material (TIM) such as thermal grease, thermal paste, or thermal compound. In addition, the cover member 300 may include a fire extinguishing material. For example, the cover member 300 may include calcium carbonate.

Moreover, the battery module according to the present disclosure may further include a bus bar assembly 400, as shown in FIGS. 2 and 3. The bus bar assembly 400 may be configured to support the electrode leads 111, facilitate interconnection of the electrode leads 111, and enable sensing of voltage from the electrode leads 111. In particular, the bus bar assembly 400 may include a module bus bar 410 and a bus bar housing 420, as shown in FIG. 3.

Here, the module bus bar 410 may be made of an electrically conductive material, such as a metal material. Also, the module bus bar 410 may be configured to electrically connects two or more electrode leads 111 or to be connected to one or more electrode leads 111 to transmit sensing information to a control unit such as a battery management system (BMS).

In addition, the bus bar housing 420 may be made of an electrically insulating material, such as a plastic material. Also, the bus bar housing 420 may be configured such that the module bus bar 410 is seated and fixed. Moreover, the bus bar housing 420 may have a slit formed therein, as indicated by S1 in FIG. 3. Also, the module bus bar 410 may be attached to an outer side of the bus bar housing 420, for example, the front side. In this case, the electrode lead 111 may pass through the slit S1 of the bus bar housing 420 and contact the module bus bar 410 located outside. In particular, the electrode lead 111 may be coupled and fixed to the module bus bar 410 alone or in a stacked state of two or more. At this time, as a coupling fixing method between the electrode lead 111 and the module bus bar 410, a method such as laser welding or ultrasonic welding may be used, but various other fastening methods may also be applied.

At least a portion of the cover member 300 may be located outside the bus bar housing 420, such as on the front side, and may be attached to the electrode lead 111. For example, as shown in FIGS. 2 to 4, the electrode lead 111 may be configured to be stacked with the module bus bar 410 on the outside of the bus bar housing 420, that is, on the front side. At this time, the cover member 300 may be adhered to the outer side of the electrode lead 111, that is, to the front side. In this case, the cover member 300 may also be adhered to the module bus bar 410 and/or the bus bar housing 420 together with the electrode lead 111. For example, the cover member 300 may be adhered to the front surface of the electrode lead 111, the module bus bar 410, and the bus bar housing 420. Meanwhile, although not shown in the drawing, the cover member 300 may also be provided on the rear side of the cell assembly 100, and may be adhered to the rear surface of the rear side electrode lead 111, the rear side module bus bar 410, and the rear side bus bar housing 420 of the cell assembly 100.

In addition, the battery module according to the present disclosure may further include a terminal terminal 500 and a connector terminal 600.

Here, the terminal terminal 500 may include a positive terminal and a negative terminal. Also, the terminal terminal 500 is made of a metal material having electrical conductivity such as copper or aluminum, and may function as a passage through which charging and discharging currents flow by being connected to other components outside the battery module. In addition, the connector terminal 600 may function as a passage for giving and receiving various information or signals of the cell assembly, such as the electrical characteristics of the cell assembly 100, for example the voltage of each battery cell 110 or the overall voltage of the cell assembly 100, to and from a control configuration such as a BMS. The terminal terminal 500 or the connector terminal 600 is a component widely provided in the battery module, and a detailed description thereof will be omitted.

The terminal terminal 500 and the connector terminal 600 may be located in the bus bar housing 420, as shown in FIG. 3 and the like. However, the present disclosure is not necessarily limited to this form, and the terminal terminal 500 and the connector terminal 600 may be located in other portions than the bus bar housing 420.

In this embodiment, the cover member 300 may not be adhered to the terminal terminal 500 or the connector terminal 600. That is, the cover member 300 is mainly adhered to portions other than the terminal terminal 500 and the connector terminal 600, and may be configured such that at least a portion of each of the terminal terminal 500 and the connector terminal 600 is exposed to the outside.

The module case 200 may include a body frame 210 and an end plate 220.

Here, the body frame 210 may be configured in a form in which at least one of the front and rear sides is open. In particular, as shown in FIG. 2, the body frame 210 may be configured such that the upper, lower, left and right sides are closed, and the front and rear sides are open. In this case, each of the upper, lower, left, and right sides may be configured in the form of a plate, and these four plates may be manufactured in the form of a tube integrated with each other. And, with respect to the body frame 210 of this type, it may be referred to as a mono frame. That is, the body frame 210 may have an upper plate, a lower plate, a left plate, and a right plate, and an internal space may be limited by these plates. In addition, the cell assembly 100 may be accommodated in this limited internal space of the body frame 210 as described above.

In addition, the end plate 220 may be configured to be coupled to the opening of the body frame 210. For example, when the body frame 210 is configured in the form of a mono frame in which the front and rear are open as shown in FIGS. 1 and 2, the end plate 220 may be provided at each of the front and rear of the body frame 210 and coupled to the front opening and rear opening of the body frame 210, respectively. In this case, the internal space of the body frame 210 is limited in the front and rear by the end plate 220, so that the internal space may be closed as a whole.

In this embodiment, the cell assembly 100 may be configured such that the electrode lead 111 of each battery cell 110 is located at a side near the end plate 220. That is, referring to FIG. 2, each of the plurality of battery cells 110 provided in the cell assembly 100 is a pouch-type secondary battery and may be configured in a vertically upright form. That is, the wide surface of the accommodating portion of each battery cell 110 may face the left and right directions, and the sealing portion surrounding the periphery of the accommodating portion of each battery cell 110 may be located at the top, bottom, front, and rear of the accommodating portion. Also, the electrode lead 111 may be located on the front and rear sides of each battery cell 110. In addition, the plurality of battery cells 110 may be disposed side by side in a horizontal direction, particularly in the left-right direction (X-axis direction). Therefore, in the sealing portion of each battery cell 110, the terrace portion where the electrode lead 111 is located can be said to be located on the front and rear sides.

At least a portion of the cover member 300 may be interposed between the electrode lead 111 of the cell assembly 100 and the end plate 220. That is, at least a portion of the cover member 300 may be located outside (front or rear) the electrode lead 111 of each battery cell 110. Also, the cover member 300 may be adhered to the electrode lead 111, and an outer surface of the cover member 300 may face the end plate 220.

According to this embodiment, venting gas or flame discharged from a specific battery cell 110 may be suppressed from being directed toward the end plate 220. In addition, since the cover member 300 adhered to the electrode lead 111 prevents direct contact between the electrode lead 111 and the end plate 220, an injection-type insulating cover included in the conventional battery module, that is, an injection cover need not exist. In other words, in the prior art, an injection cover that is physically separated from the electrode lead 111 and the end plate 220 was required therebetween for electrical insulation and the like. Also, when such an injection cover is melted by flame or gas, it is attached to an electrode lead or the like, thereby causing an internal short circuit or the like. However, according to the above embodiment of the present disclosure, the insulating cover adhered to the electrode lead 111 is interposed between the electrode lead 111 and the end plate 220, so that the conventional injection cover may be removed.

In the above embodiment, the body frame 210 may be made of a metal material such as aluminum or stainless steel (SUS). In addition, the end plate 220 may also be made of a metal material like the body frame 210. In particular, the end plate 220 may be made of the same material as the body frame 210. According to the present disclosure, the cover member 300 made of an electrically insulating material may be attached to the outside of the electrode lead 111 of the cell assembly 100, and thus, even if the end plate 220 is made of a metal material having electrical conductivity, electrical insulation between the cell assembly 100 and the end plate 220 may be maintained. Alternatively, at least a portion of the module case 200 may include a non-metallic material such as plastic.

The cover member 300 may be configured in the form of a film. In particular, the cover member 300 may include a base layer made of a polymer material in the form of a thin sheet, wherein an adhesive layer may be provided on at least one surface of the base layer, such as an inner surface. For example, referring to the configuration of FIG. 3, in the case of the cover member 300 located on the front side of the cell assembly 100, an adhesive material may be applied to the rear side surface of the base layer.

Here, the cover member 300 may have a thin thickness, such as 0.5 mm to 1 mm. However, the thickness of the cover member 300 may be appropriately designed in a different form depending on various situations or conditions, such as the type, shape and size of the battery cell 110, the material of the cover member 300, and the like.

In addition, the cover member 300 may be configured in a bent shape to cover the outer side of the cell assembly 100. For example, as indicated by portions A2 and A2' in FIGS. 2 and 3, the cover member 300 may be configured in a form where both ends in the horizontal direction are bent. Also, such a bent portion may be bent toward the outer surfaces of the two battery cells 110 positioned at the outermost side of the cell assembly 100 stacked in the horizontal direction. In particular, the bent portions of both ends of the cover member 300 in the horizontal direction may be adhered to the outside of the cell assembly 100. That is, the left and right bent portions of the cover member 300, such as those indicated by A2 and A2' in FIGS. 2 and 3, may be adhered to the left and right surfaces of the cell assembly 100, respectively.

According to this embodiment of the present disclosure, the coupling force between the cover member 300 and the cell assembly 100 may be improved to prevent deformation of the position or shape of the cover member 300 even in the event of venting gas or flame. Therefore, the effect of protecting the electrode lead 111 by the cover member 300 may be further improved. In addition, according to the above embodiment, the movement of venting gas or flame to the front and rear sides of the cell assembly 100 may be more effectively suppressed by reducing or eliminating the gap between the cover member 300 and the cell assembly 100.

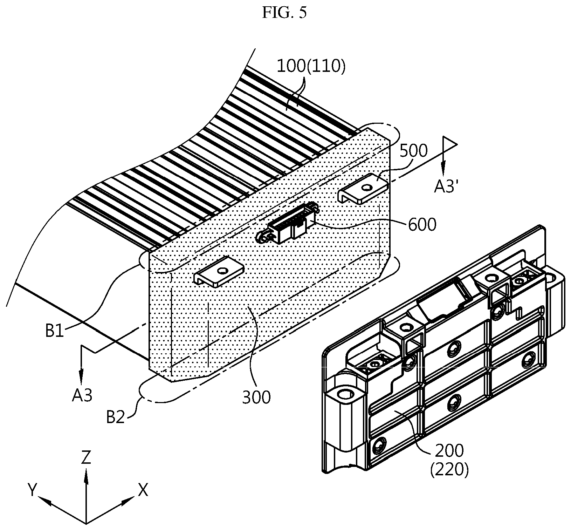

The cover member 300 may be configured in a form filled in a side portion where the electrode lead 111 protrudes in the cell assembly 100. This will be described in more detail with further reference to FIGS. 5 to 7 and the like.

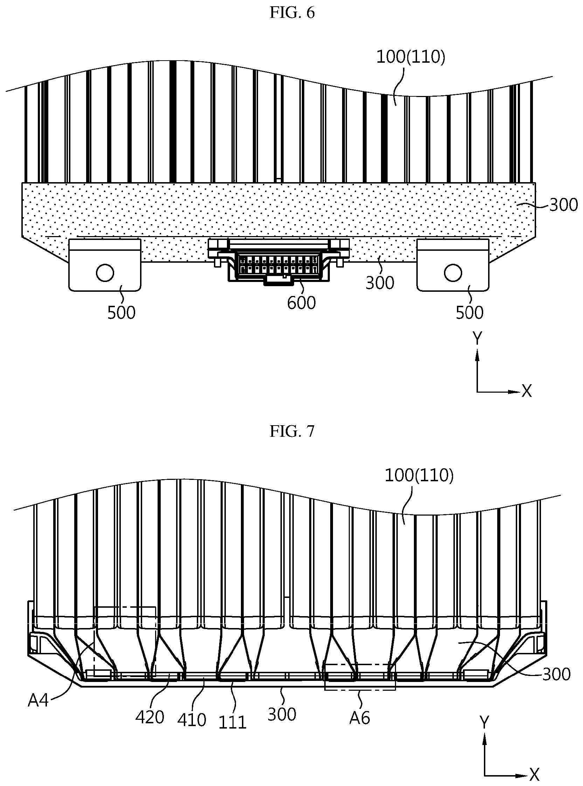

FIG. 5 is a partial perspective view schematically showing some configurations of a battery module according to another embodiment of the present disclosure. Also, FIG. 6 is a top view showing the configuration of FIG. 5. And, FIG. 7 is a cross-sectional view taken along line A3-A3' in FIG. 5. Meanwhile, for the various embodiments included in this specification, including the present embodiment, detailed descriptions of portions to which descriptions of other embodiments may be applied identically or similarly are omitted, and the portions with differences will be mainly described.

Referring to FIGS. 5 to 7, the cell assembly 100 may be configured such that the electrode lead 111 protrudes from the front side. In addition, the module case 200, particularly the end plate 220, may be positioned on the front side of the cell assembly 100. In this configuration, the cover member 300 may be configured to be filled and adhered to the front side of the cell assembly 100.

For example, the cover member 300 may be configured to be filled in at least a portion of the space between the front side of the cell assembly 100 and the end plate 220. In this case, the cover member 300 may be configured to be injected or applied as an adhesive having initial viscosity and fluidity, be filled in at least a portion of the space between the front side of the cell assembly 100 and the end plate 220, and then be cured. In another example, the cover member 300 may also be configured to continue to have viscosity or fluidity without hardening after being injected or applied to the front side of the cell assembly 100.

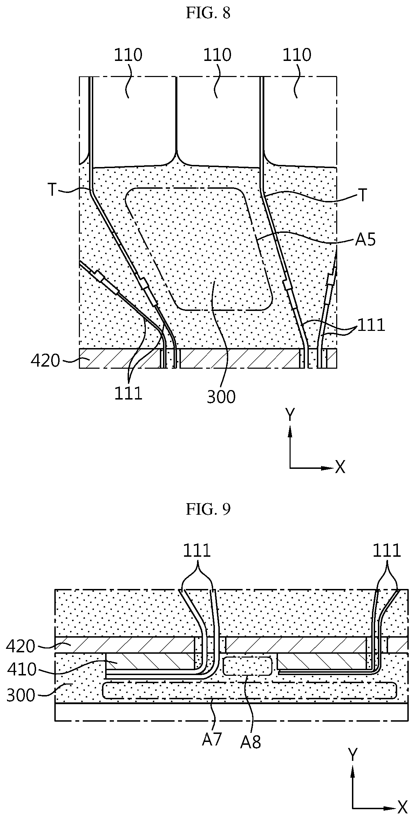

In particular, the cover member 300 may be filled between the sealing portions of adjacent battery cells 110. This will be described in more detail with further reference to FIG. 8.

FIG. 8 is an enlarged view showing portion A4 in FIG. 7.

Referring to FIG. 8, the electrode leads 111 of each battery cell 110 included in the cell assembly 100 may protrude toward the front side. In this case, in each battery cell 110, a terrace portion, which is indicated by T, as a sealing portion in a form in which an electrode lead 111 is interposed may be located on the front side. Also, an empty space, as indicated by A5, may be formed between the sealing portions of each battery cell 110, that is, between the terrace portions T of each battery cell 110. In this case, the cover member 300 may be filled in the space between the sealing portions of adjacent battery cells 110, that is, the space between the terrace portions of adjacent battery cells 110.

Also, when viewed with respect to one sealing portion (terrace portion), the cover member 300 may be filled in the left and right sides of each sealing portion. In addition, although not shown in FIG. 8, the cover member 300 may also be filled in the upper and lower portions of each sealing portion. In this case, it can be said that the cover member 300 is configured to cover all of the upper, lower, left, and right portions of the sealing portion (terrace portion).

According to this configuration of the present disclosure, when the internal pressure of a specific battery cell 110 increases due to a situation such as thermal runaway, rupture may be prevented from occurring at the terrace portion where the electrode lead 111 is located. Therefore, it is possible to more effectively prevent venting gas or flame from being directly ejected or exposed toward the end plate 220. In addition, according to the above embodiment, movement of the electrode lead 111 positioned on the terrace portion may be restricted by reliably preventing movement of the terrace portion by the cover member 300.

In particular, the cover member 300 may be located in the front and/or rear of the cell assembly 100, but may be configured to be filled entirely from the top to the bottom.

For example, as shown in FIG. 5, the cover member 300 located on the front side of the cell assembly 100 may be filled entirely from the top to the bottom of the cell assembly 100. That is, the filling configuration between the terrace portions, such as the portion indicated by A5 in FIG. 8, may be made to extend from the upper end to the lower end of the cell assembly 100.

Moreover, the cover member 300 may be configured such that the upper and lower ends are bent toward the cell assembly 100. That is, the cover member 300 may be filled up to the top surface of the cell assembly 100 and may have a shape bent to the top surface of the cell assembly 100, as indicated by B1 in FIG. 5. At this time, the cover member 300 may be adhered to the top surface of the cell assembly 100. Also, the cover member 300 may be interposed between the top surface of the cell assembly 100 and the inner surface (bottom surface) of the module case 200.

In addition, the cover member 300 may be filled up to the bottom surface of the cell assembly 100 and may have a shape bent to the bottom surface of the cell assembly 100, as indicated by B2 in FIG. 5. At this time, the cover member 300 may be adhered to the bottom surface of the cell assembly 100. Also, the cover member 300 may be interposed between the bottom surface of the cell assembly 100 and the inner surface (top surface) of the module case 200.

According to this embodiment of the present disclosure, it is possible to more reliably suppress the movement of venting gas or flame toward the electrode lead 111 side of the cell assembly 100. That is, in the case of the above embodiment, the space between the front side and/or the rear side of the cell assembly 100 and the end plate 220 is reduced. In addition, the movement of venting gas or flame discharged to the upper central portion or the lower central portion of the cell assembly 100 toward the end plate 220 may be blocked by the cover member 300. Therefore, according to this embodiment, various problems caused by the movement of flame or venting gas toward the portion where the electrode lead 111 is located or the end plate 220 may be prevented more effectively.

In addition, according to this embodiment, the coupling between the cover member 300 and the cell assembly 100 may be further improved. Also, according to the above embodiment, the electrode lead 111 of the battery cell 110 may be more reliably protected by the cover member 300.

In addition, the cover member 300 may be filled in a horizontal direction between the body of each battery cell 110 and the bus bar assembly 400. For example, referring to FIG. 8, in each battery cell 110, the accommodating portion in which the electrode assembly is accommodated and the bus bar assembly 400 may be disposed being spaced apart from each other by a predetermined distance in the front-rear direction (Y-axis direction in the drawing). At this time, the cover member 300 may be filled in a form interposed between the accommodating portion of the battery cell 110 and the bus bar assembly 400, particularly the bus bar housing 420. In this case, the cover member 300 may also be said to be filled (positioned) between the accommodating portion of each battery cell 110 and the electrode lead 111.

The cover member 300 may be positioned on an outer side of the electrode lead 111 in a horizontal direction. This will be described in more detail with further reference to FIG. 9 together with FIG. 7.

FIG. 9 is an enlarged view showing portion A6 in FIG. 7.

Referring to FIGS. 7 and 9, the cover member 300 may be positioned on an outer side of the electrode lead 111. As a more specific example, the electrode lead 111 may be located on the front side of the cell assembly 100 and may be in contact with different electrode leads 111. At this time, the electrode lead 111 may be in contact with the module bus bar 410 and may be welded together with the module bus bar 410. In this configuration, the cover member 300 may be located on the outer side of the electrode lead 111, for example, on the front side, as indicated by A7 in FIG. 9.

In this case, exposure of the electrode lead 111 to the outside may be prevented by the cover member 300. Moreover, the end plate 220 may be positioned outside the electrode lead 111. Therefore, according to the embodiment, the cover member 300 may be interposed between the electrode lead 111 and the end plate 220. Accordingly, when the cover member 300 is made of a material having electrical insulation, an electrical short between the electrode lead 111 and the end plate 220 may be prevented even if the end plate 220 is made of a metal material.

In addition, the cover member 300 may be interposed between the electrode leads 111. For example, adjacent electrode leads 111 may be spaced apart from each other, as indicated by A8 in FIG. 9. At this time, the cover member 300 may be filled between the electrode leads 111. According to this embodiment, movement or unintentional mutual contact of the electrode leads 111 may be prevented more reliably.

Also, in the above embodiment, the cover member 300 may be located on an outer side of the bus bar assembly 400. That is, referring to the configuration of FIG. 9, the cover member 300 may be located on the front side (-Y-axis direction side) of the bus bar assembly 400.

Moreover, the cover member 300 may be configured to be filled on both the inner and outer sides of the bus bar assembly 400. For example, the cover member 300 may be filled on both the inner side (rear side) and the outer side (front side) of the bus bar assembly 400, as shown in FIGS. 7 to 9.

According to this embodiment of the present disclosure, the bus bar assembly 400 to which the electrode lead 111 is fixed by welding may be reliably protected and fixed by the cover member 300. In particular, the bus bar housing 420 may be formed of a plastic material, and it is possible to more reliably prevent the bus bar housing 420 from being damaged or melted by a flame or a high-temperature venting gas. Also, in this case, the cover member 300 is provided (filled) around the bus bar assembly 400, and thus the empty space at the portion where the bus bar assembly 400 is located may be reduced. Therefore, in this case, even if a flame or venting gas is generated in the cell assembly 100, the safety of the battery module may be more reliably guaranteed.

Meanwhile, when the cover member 300 is provided around the bus bar assembly 400, the cover member 300 may be configured not to cover the terminal terminal 500 or the connector terminal 600. That is, as shown in the various drawings described above, the terminal terminal 500 or the connector terminal 600 may be configured to be exposed to the outside. This is because these terminal terminals 500 or connector terminals 600 need to be exposed to the outside of the module case 200 and connected to other external configurations.

In particular, when the cover member 300 is configured to be filled in the side of the cell assembly 100, the flexible adhesive material for forming the cover member 300 may be injected into the module case 200 in which the cell assembly 100 is accommodated. At this time, when the fluid adhesive material is injected into both the front and rear of the bus bar assembly 400, it may be configured such that the vicinity of the terminal terminal 500 or the connector terminal 600 provided on top of the bus bar assembly 400, especially the upper portion thereof is not filled with an adhesive material. For example, the bus bar housing 420 may have a guide structure such as a partition wall to prevent an adhesive material for the cover member 300 from flowing into the vicinity of the terminal terminal 500 or the connector terminal 600.

In addition, various structures or manufacturing methods may be applied to expose the terminal terminal 500 or the connector terminal 600 to the outside without being completely covered by the cover member 300.

The cover member 300 may be configured to entirely cover the electrode leads 111 of the plurality of battery cells 110 from top to bottom.

For example, as shown in FIG. 5, the cover member 300 may be provided to entirely cover the electrode lead 111 located on the front side of the bus bar housing 420 from the top to the bottom of the electrode lead 111.

In particular, the cover member 300 may be configured to completely cover the entire electrode lead 111 provided in the cell assembly 100 in the vertical direction. That is, the cover member 300 may be configured to entirely cover the electrode lead 111. For example, as shown in FIGS. 2, 4 and 5, in the case of the cover member 300 provided on the front side of the cell assembly 100, it may be configured such that the outer surface of the entire electrode lead 111 located on the front side of the cell assembly 100, that is, the front side surface is not exposed to the front side. Therefore, as shown in FIG. 4, when the cell assembly 100 is viewed from the front side, the electrode lead 111 may be completely covered by the cover member 300 and not exposed to the outside.

According to this embodiment of the present disclosure, the outer side of the electrode lead 111, that is, the front side, may be more reliably protected and fixed by the cover member 300. Therefore, it is possible to more effectively prevent foreign substances including molten particles from being attached to the outer side of the electrode lead 111 or the electrode lead 111 from moving. Moreover, as shown in various previous drawings, when a plurality of battery cells 110 are stacked in the left-right direction, there is a high possibility that the venting gas or flame generated in a specific battery cell 110 may flow into the electrode lead 111 side from the top or bottom. Therefore, if the cover member 300 covers all of the electrode lead 111 from top to bottom as in the above embodiment, the protective effect of the electrode lead 111 may be further improved.

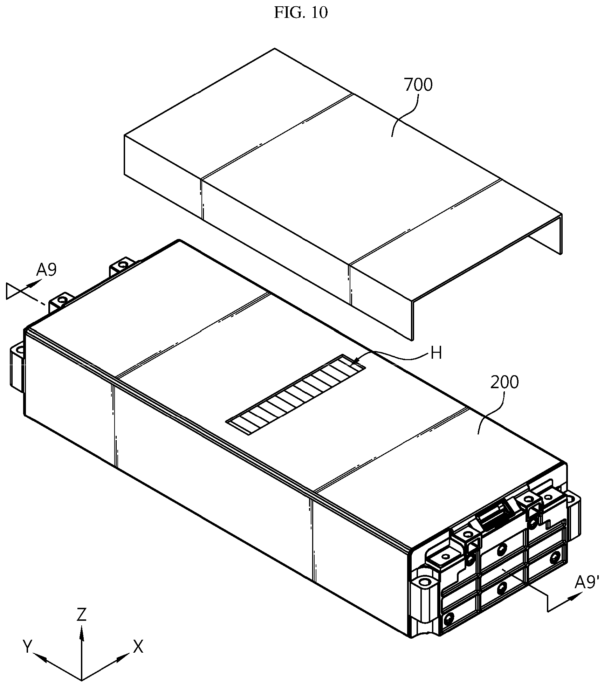

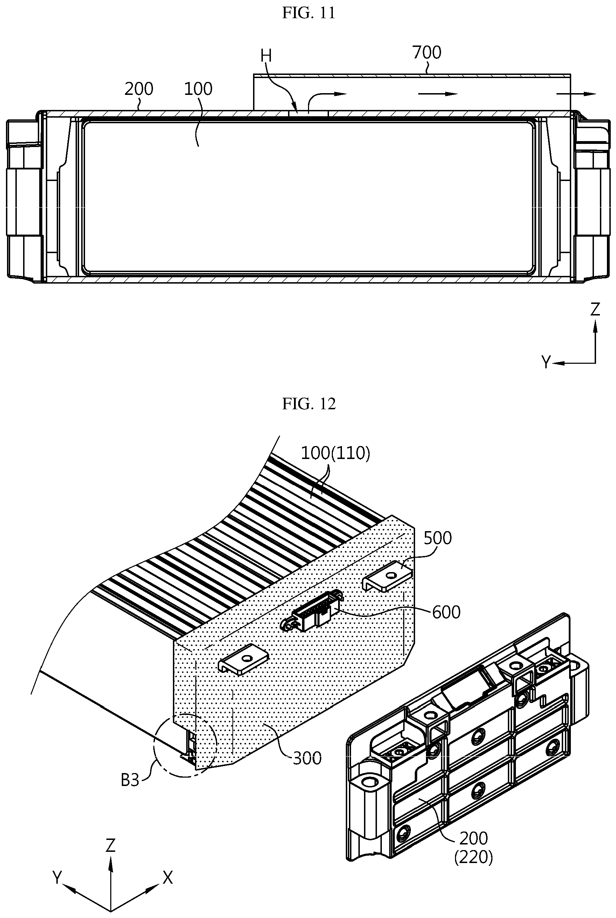

FIG. 10 is a view schematically showing some separated configurations of a battery module according to still another embodiment of the present disclosure. Also, FIG. 11 is a view schematically showing a cross-sectional configuration in a state in which the battery module of FIG. 10 is coupled. For example, FIG. 11 schematically shows a cross-sectional shape of a line A9-A9' in the configuration in which the battery module of FIG. 10 is coupled.

Referring to FIGS. 10 and 11, a venting hole may be formed in the module case 200, as indicated by H. The venting hole H may be configured to pass through the module case 200. In this configuration, when the venting gas is generated and ejected from the cell assembly 100 accommodated in the inner space of the module case 200, the venting gas may be discharged to the outside of the module case 200 through the venting hole H.

In particular, the cell assembly 100 may be configured in a form in which a plurality of battery cells 110 are stacked in the left-right direction inside the module case 200, as shown in the various drawings described above. At this time, the venting hole H may be formed on the upper and/or lower side of the module case 200. That is, the module case 200 may include an upper plate and a lower plate, and the venting hole H may be formed in the upper plate or the lower plate. Moreover, as shown in FIG. 10, the venting hole H may be configured to extend long in the left-right direction, which is the stacking direction of the battery cells 110, in the upper plate or the lower plate.

According to this embodiment of the present disclosure, the venting gas or flame ejected from the cell assembly 100 may be smoothly discharged to the outside of the module case 200 through the venting hole H. Therefore, the effect of the present disclosure of preventing venting gas or flame from being directed toward the electrode leads 111 located at the front and rear sides of the cell assembly 100 by the cover member 300 may be further improved.

Moreover, as in the above-described embodiment, when the front and rear sides of each battery cell 110, that is, the terrace portion side are adhered by the cover member 300 in a state where the plurality of battery cells 110 are arranged in the left-right direction, the venting gas may be discharged from each battery cell 110 in an upward or downward direction. At this time, when the venting hole H is formed in the upper and/or lower portion of the module case 200, as in the above embodiment, the venting gas or the like may be easily directed to the venting hole H rather than toward the electrode lead 111.

In the embodiment in which the venting hole H is provided in the module case 200 as described above, the battery module according to the present disclosure may further include a venting unit 700 as shown in FIGS. 10 and 11.

The venting unit 700 may be configured to be provided on at least one side of the module case 200 to allow venting gas to move. In particular, the venting unit 700 may be provided outside the module case 200. Moreover, the venting unit 700 may be configured to be attached to at least a portion of the module case 200 in which the venting hole H is formed. As shown in FIGS. 10 and 11, when the venting hole H is located at the top, the venting unit 700 may be attached to the top of the module case 200.

In addition, the venting unit 700 may have a venting channel formed therein. That is, the venting unit 700 may be configured such that the venting gas discharged from the venting hole H flows into an empty space therein, that is, the venting channel, and is movable within the venting channel, as indicated by the arrow in FIG. 11. Also, the venting unit 700 may have an outlet formed on at least one side thereof so that the venting gas inside is discharged to the outside. The venting unit 700 may be made of a metal material such as aluminum or steel.

According to this embodiment of the present disclosure, by controlling the path of the venting gas discharged from the module case 200 of the battery module, such as discharge direction or location thereof, damage to a user or other device caused by the high-temperature venting gas may be eliminated or reduced. In addition, according to the above embodiment, the discharge path of the venting gas may be bent through the venting unit 700, thereby more effectively suppressing the discharge of fire-causing factors such as flames or sparks to the outside of the battery module. In this case, various types of blocking structures for blocking substances such as flames or sparks may be provided inside the venting unit 700. In addition, according to this embodiment of the present disclosure, since the venting unit 700 may be attached or welded to the outside without significantly changing the general configuration of the battery module, such as the structure of the module case 200 or the cell assembly 100 provided therein, it is possible to control the venting gas in various ways with a relatively easy manufacturing process and a simple structure.

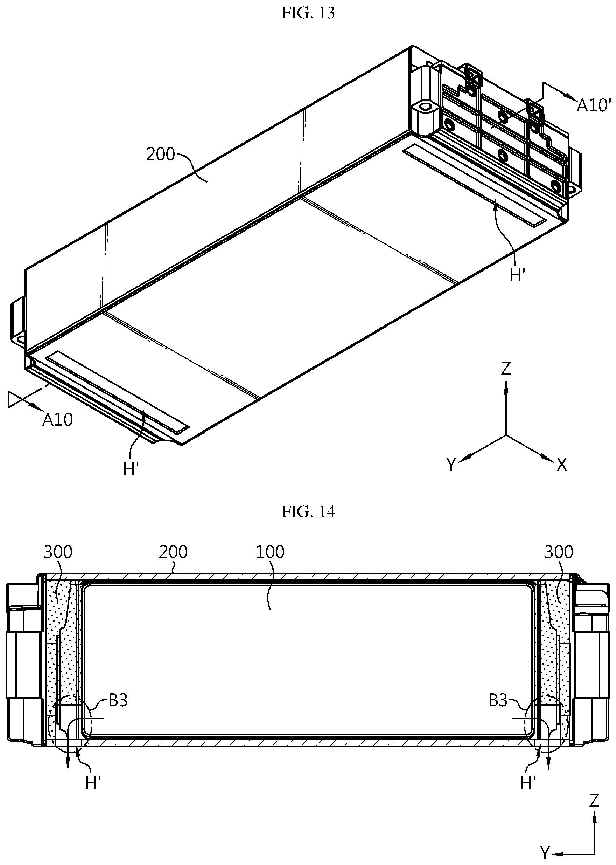

FIG. 12 is a view schematically showing some separated configurations of a battery module according to still another embodiment of the present disclosure. Also, FIG. 13 is a perspective view of a configuration of a battery module including the configuration of FIG. 12 as viewed from the bottom. And, FIG. 14 is a cross-sectional view taken along line A10-A10' in FIG. 13. The present embodiment will also be mainly described with respect to a portion different from the previous embodiments.

Referring to FIGS. 12 to 14, the cover member 300 may be configured in a form similar to FIG. 5 to cover the side surface of the cell assembly 100, particularly the front side and/or rear side of the cell assembly 100 where the electrode lead 111 is located. However, unlike FIG. 5, the cover member 300 may be configured such that it does not cover the entire side of the cell assembly 100 in fully close contact and does not cover a portion of the side of the cell assembly 100 in close contact.

More specifically, as indicated by B3 in FIGS. 12 and 14, the cover member 300 may be configured not to cover a lower portion of the side of the cell assembly 100. Moreover, as shown in FIGS. 12 and 14, the cover member 300 may be configured to be spaced apart from the side of the cell assembly 100 by a predetermined distance in a horizontal direction (front-rear direction, Y-axis direction). In this case, it can be said that the cover member 300 is configured to cover the outside of the cell assembly 100 in a horizontal direction, but to be open and uncovered in the downward direction.

According to this embodiment, the venting gas or the like may be controlled through a portion not covered by the cover member 300, such as a portion B3. That is, when venting gas or flame is generated from the cell assembly 100, the venting gas or the like may be guided in a downward direction, as indicated by the arrow in FIG. 14.

In this case, a venting hole may be formed on the lower side of the module case 200, as indicated by H' in FIGS. 13 and 14. Also, the venting hole H' may be provided at a position communicating with the uncovered portion (unfilled portion, B3) of the cover member 300, as shown in FIG. 14. Moreover, this embodiment may be applied more usefully when, in an embodiment in which the battery module is seated in the pack case, a configuration for inducing venting gas or the like is provided on a portion of the pack case in contact with the lower side of the battery module, such as the bottom side of the pack case.

According to this embodiment of the present disclosure, a directional venting configuration in which venting gas or flame formed inside the battery module is directed to a specific direction of the battery module, such as the lower side, may be implemented more easily. Moreover, according to the above embodiment, it is possible to more reliably prevent venting gas or flame from being directed toward the module terminal located on the upper side of the front or rear of the battery module.

In addition, in another embodiment of the present disclosure, the venting direction may be controlled by adjusting the filling amount (filling ratio) of the cover member 300. For example, in the embodiments of FIGS. 12 to 14, the cover member 300 may be provided to be entirely filled on the front and rear sides of the cell assembly 100, but the filling amount of the cover member 300 may be smaller in the B3 portion than in other portions. In this case, venting gas or the like may be induced to a portion of the cover member 300 including a small filling amount.

Meanwhile, in the embodiments of FIGS. 12 to 14, an embodiment in which the venting gas is induced to the lower side of the battery module is shown, but an embodiment in which the venting gas is induced to the other side of the battery module, such as the upper side, may also be provided.

The battery pack according to the present disclosure may include one or more battery modules according to the present disclosure described above. Also, the battery pack according to the present disclosure may further include various other components in addition to the battery module, such as components of the battery pack known at the time of filing of the present disclosure, for example, a BMS, a bus bar, a pack case, a relay, a current sensor, and the like.

The battery module according to the present disclosure may be applied to a vehicle such as an electric vehicle or a hybrid vehicle. That is, the vehicle according to the present disclosure may include the battery module according to the present disclosure or the battery pack according to the present disclosure. Also, the vehicle according to the present disclosure may further include various other components included in the vehicle in addition to the battery module or the battery pack. For example, the vehicle according to the present disclosure may further include a vehicle body, a motor, a control device such as an electronic control unit (ECU), and the like in addition to the battery module according to the present disclosure.

In addition, the battery module according to the present disclosure may be applied to an energy storage system (ESS). That is, the energy storage system according to the present disclosure may include the battery module according to the present disclosure or the battery pack according to the present disclosure.

Meanwhile, the terms indicating directions as used herein such as upper, lower, left, right, front, and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that a variety of modifications and changes may be made thereto within the scope of the appended claims.

### [Reference Signs]

100: cell assembly
110: battery cell
111: electrode lead
200: module case
210: body frame, 220: end plate
300: cover member
400: bus bar assembly
410: module bus bar, 420: bus bar housing
500: terminal terminal
600: connector terminal
700: venting unit

## Claims

1. A battery module comprising:
a cell assembly (100) comprising a plurality of battery cells (110) electrically connected to each other through an electrode lead (111);
a module case (200) accommodating the cell assembly in an internal space; and
a cover member (300) adhered to a side portion of the cell assembly in which the electrode lead protrudes in the internal space of the module case,
**characterised in that** the cover member (300) is configured to be filled in a side portion of the cell assembly where an electrode lead (111) protrudes in the cell assembly (100).

2. The battery module according to claim 1,
wherein the module case (200) comprises a body frame (210) in which at least one of a front side and a rear side is open, and an end plate (220) coupled to the opening of the body frame (210).

3. The battery module according to claim 2,
wherein the electrode lead (111) is located at a side near the end plate in the cell assembly (100), and
the cover member (300) is interposed between the electrode lead (111) of the cell assembly and the end plate (220).

4. The battery module according to claim 1,
wherein the cover member (300) is filled between the sealing portions of adjacent battery cells (110).

5. The battery module according to claim 1,
wherein the cover member (300) is filled entirely from an upper end to a lower end at the front or rear of the cell assembly (100).

6. The battery module according to claim 5,
wherein the cover member (300) is configured such that the upper end and the lower end are bent in the direction of the cell assembly (100).

7. The battery module according to claim 1,
wherein the cover member (300) is configured to entirely cover the electrode leads (111) of the plurality of battery cells (110) from an upper end to a lower end.

8. The battery module according to claim 1,
wherein the module case (200) has a venting hole formed on at least one side of an upper portion and a lower portion.

9. The battery module according to claim 8,
which further comprises a venting unit (700) provided on the outer side of a portion where a venting hole is formed in the module case (200) and configured to allow the venting gas discharged from the venting hole to move.

10. A battery pack comprising a battery module according to any one of claims 1 to 9.

11. A vehicle comprising a battery module according to any one of claims 1 to 9.

## Patentansprüche

1. Batteriemodul, umfassend:
eine Zellenanordnung (100), welche eine Mehrzahl von Batteriezellen (110) umfasst, welche durch eine Elektrodenleitung (111) elektrisch miteinander verbunden sind;
ein Modulgehäuse (200), welches die Zellenanordnung in einem Innenraum beherbergt; und
ein Abdeckungselement (300), welches an einen Seitenabschnitt der Zellenanordnung angehaftet ist, in welchem die Elektrodenleitung in den Innenraum des Modulgehäuses hervorsteht,
**dadurch gekennzeichnet, dass** das Abdeckungselement (300) dazu eingerichtet ist, in einen Seitenabschnitt der Zellenanordnung gefüllt zu sein, an welchem eine Elektrodenleitung (111) in die Zellenanordnung (100) hervorsteht.

2. Batteriemodul nach Anspruch 1,
wobei das Modulgehäuse (200) einen Körperrahmen (210), in welchem wenigstens eine von einer Vorderseite und einer Rückseite offen ist, und eine Endplatte (220) umfasst, welche mit der Öffnung des Körperrahmens (210) gekoppelt ist.

3. Batteriemodul nach Anspruch 2,
wobei die Elektrodenleitung (111) an einer Seite nahe der Endplatte in der Zellenanordnung (100) angeordnet ist, und
das Abdeckungselement (300) zwischen der Elektrodenleitung (111) der Zellenanordnung und der Endplatte (220) eingefügt ist.

4. Batteriemodul nach Anspruch 1,
wobei das Abdeckungselement (300) zwischen den Dichtungsabschnitten benachbarter Batteriezellen (110) gefüllt ist.

5. Batteriemodul nach Anspruch 1,
wobei das Abdeckungselement (300) vollständig von einem oberen Ende zu einem unteren Ende an der Vorderseite oder Hinterseite der Zellenanordnung (100) gefüllt ist.

6. Batteriemodul nach Anspruch 5,
wobei das Abdeckungselement (300) derart eingerichtet ist, dass das obere Ende und das untere Ende in die Richtung der Zellenanordnung (100) gebogen sind.

7. Batteriemodul nach Anspruch 1,
wobei das Abdeckungselement (300) dazu eingerichtet ist, die Elektrodenleitungen (111) der Mehrzahl von Batteriezellen (110) von einem oberen Ende zu einem unteren Ende vollständig abzudecken.

8. Batteriemodul nach Anspruch 1,
wobei das Modulgehäuse (200) ein Belüftungsloch aufweist, welches an wenigstens einer Seite eines oberen Abschnitts und eines unteren Abschnitts gebildet ist.

9. Batteriemodul nach Anspruch 8,
welches ferner eine Belüftungseinheit (700) umfasst, welche an der Außenseite eines Abschnitts bereitgestellt ist, an welchem ein Belüftungsloch in dem Modulgehäuse (200) gebildet ist, und dazu eingerichtet ist, ein Bewegen des Belüftungsgases zuzulassen, welches von dem Belüftungsloch entladen wird.

10. Batteriepack umfassend ein Batteriemodul nach einem der Ansprüche 1 bis 9.

11. Fahrzeug umfassend ein Batteriemodul nach einem der Ansprüche 1 bis 9.

## Revendications

1. Module de batterie comprenant :
un ensemble d'éléments (100) comprenant une pluralité d'éléments de batterie (110) connectés électriquement les uns aux autres par l'intermédiaire d'un fil d'électrode (111) ;
un boîtier de module (200) recevant l'ensemble d'éléments dans un espace interne ; et
un élément de couverture (300) adhérant à une partie latérale de l'ensemble d'éléments dans lequel le fil d'électrode fait saillie dans l'espace interne du boîtier de module,
**caractérisé en ce que** l'élément de couverture (300) est configuré pour être rempli dans une partie latérale de l'ensemble d'éléments où un fil d'électrode (111) fait saillie dans l'ensemble d'éléments (100).

2. Module de batterie selon la revendication 1,
dans lequel le boîtier de module (200) comprend un cadre de corps (210) dans lequel au moins un parmi un côté avant et un côté arrière est ouvert, et une plaque d'extrémité (220) accouplée à l'ouverture du cadre de corps (210).

3. Module de batterie selon la revendication 2,
dans lequel le fil d'électrode (111) est situé au niveau d'un côté près de la plaque d'extrémité dans l'ensemble d'éléments (100), et
l'élément de couverture (300) est interposé entre le fil d'électrode (111) de l'ensemble d'éléments et la plaque d'extrémité (220).

4. Module de batterie selon la revendication 1,
dans lequel l'élément de couverture (300) est rempli entre les parties d'étanchéité d'éléments de batterie (110) adjacents.

5. Module de batterie selon la revendication 1,
dans lequel l'élément de couverture (300) est rempli entièrement depuis une extrémité supérieure à une extrémité inférieure à l'avant ou à l'arrière de l'ensemble d'éléments (100).

6. Module de batterie selon la revendication 5,
dans lequel l'élément de couverture (300) est configuré de telle sorte que l'extrémité supérieure et l'extrémité inférieure soient courbées dans la direction de l'ensemble d'éléments (100).

7. Module de batterie selon la revendication 1,
dans lequel l'élément de couverture (300) est configuré pour couvrir entièrement les fils d'électrode (111) de la pluralité d'éléments de batterie (110) d'une extrémité supérieure à une extrémité inférieure.

8. Module de batterie selon la revendication 1,
dans lequel le boîtier de module (200) a un trou d'aération formé sur au moins un côté d'une partie supérieure et d'une partie inférieure.

9. Module de batterie selon la revendication 8,
qui comprend en outre une unité d'aération (700) fournie sur le côté extérieur d'une partie où un trou d'aération est formé dans le boîtier de module (200) et configurée pour permettre au gaz d'aération évacué à partir du trou d'aération de se déplacer.

10. Bloc-batterie comprenant un module de batterie selon l'une quelconque des revendications 1 à 9.

11. Véhicule comprenant un module de batterie selon l'une quelconque des revendications 1 à 9.
